# EUROPEAN PATENT SPECIFICATION

(11) **EP 1 716 003 B1**
(45) Date of publication and mention of the grant of the patent: **21.04.2010**
(21) Application number: 05708307.3
(22) Date of filing: 11.02.2005
(51) Int. Cl.: B42D 15/00, G07D 7/20

(54) **APPARATUS AND METHOD FOR IDENTIFYING AN OBJECT HAVING RANDOMLY DISTRIBUTED IDENTIFICATION ELEMENTS**
VORRICHTUNG UND VERFAHREN ZUR IDENTIFIZIERUNG EINES OBJEKTS MIT WILLKÜRLICH VERTEILTEN IDENTIFIZIERUNGSELEMENTEN
APPAREIL ET PROCEDE D'IDENTIFICATION D'UN OBJET PRESENTANT DES ELEMENTS D'IDENTIFICATION REPARTIS DE MANIERE ALEATOIRE

(30) Priority: 18.02.2004 GB 0403569
(43) Date of publication of application: 02.11.2006
(73) Proprietor: Fibreloc Limited, Rothesfield Markinch Fife KY7 6PB (GB)
(72) Inventor: SINCLAIR, Malcolm Mainland, Pitlessie, Fife KY15 7ST (GB); LAX, Sandford Ellis, Dunfermline, KY12 0NJ (GB)
(74) Representative: Brown, Deborah Frances
(86) International application number: PCT/GB2005/000482
(87) International publication number: WO 2005/080088

(56) References cited:
- EP-A- 1 300 810
- DE-A1- 10 204 870
- FR-A- 2 324 060
- GB-A- 2 324 065
- US-A- 4 114 032
- US-A- 6 035 914

## Description

The present invention relates to a method and apparatus for checking that an object is genuine. The object has a plurality of randomly distributed identification elements affixed to or embedded in the object. The object also has a reference point defining an area of the object in which at least some of the identification elements are provided. The invention relates especially, but not exclusively, to fluorescent identification elements.

At present, to prevent forgery of an object such as a credit card, a security device, e.g. a security hologram, is attached to the document. The document is difficult to forge because it is hard to recreate the hologram. However, this is quite expensive and furthermore, identical holograms are used for many cards, so the hologram cannot distinguish one particular card from another. Moreover, whilst security holograms can be attached to high cost items such as credit cards, the weight and cost makes it impractical to attach these to low-cost paper documents, such as bank notes.

It is also known to make paper having embedded UV fibres, and use this for creating bank notes. However, this system is only used as a simple yes/no check on whether the bank note does in fact contain any UV fibres. If a batch of bank paper having the embedded UV fibres were stolen, or if forgers were to create bank notes out of their own paper having embedded UV fibres, this would not be detectable by the present systems.

A method of verifying the genuineness of an object and a detector are disclosed in DE 10 204 870 A1 and US-A-6 035 914.

According to a first aspect of the present disclosure there is provided an object having a primary identifier in the form of a plurality of identification elements embedded in the object, the identification elements being visually detectable when illuminated by infrared or ultraviolet electromagnetic radiation but being visually indistinguishable from the rest of the object when illuminated with visible light; wherein the identification elements are randomly distributed so that the positions of the identification elements are unique to the object; and wherein the object is provided with a reference point in the form of a printed symbol defining an area of the object in which at least some of the identification elements are provided.

The identification elements being indistinguishable from the rest of the object when illuminated by visible light provides the advantages that the presence (and location) of the identification elements is not immediately apparent; therefore the fact that the object is security-protected is not obvious. This prevents opportunists from easily being able to make effective counterfeits.

According to a further aspect of the present disclosure there is provided an object having a primary identifier in the form of a plurality of identification elements affixed to the object, the identification elements being detectable in infrared, visible or UV wavelengths when illuminated by electromagnetic radiation having a wavelength of less than 0.1m; wherein the identification elements are randomly distributed so that the positions of the identification elements are unique to the object; and wherein the object is provided with a reference point defining an area of the object in which at least some of the identification elements are provided.

The identification elements being randomly distributed provides the object with a unique identification means, which distinguishes the object from any other object. The reference point enables consistent and accurate identification of the same area of the object, even when examined at different times by different detectors.

The reference point can define a particular area of the object to be examined, instead of the whole area of the object requiring examination. This can save a significant amount of time. In some embodiments, the reference point does not indicate to a potential counterfeiter the area of the object that will be examined. For example, if the reference point is a single printed symbol, the area of the object could be above, below or to either side of the reference point, by a small or a large distance. This prevents counterfeiters from knowing which parts of the object contain the identification elements which will be examined.

The positions of the identification elements in an area defined by the reference point can be recorded to provide a unique "fingerprint" record which can be checked later to confirm the object is genuine.

Typically, the identification elements comprise fibres. Optionally, the fibres are selected from the group consisting of viscose, wool, cellulose, synthetic fibres, paper and water-resistant paper; preferably, the fibres are viscose fibres.

Alternatively, the identification elements are in the form of solid particulates. Optionally, the identification elements are selected from the group consisting of mica, silica and synthetic particulates.

Typically, the identification elements are fluorescent so that they emit visible light in response to ultraviolet light. Typically, the identification elements are provided with a fluorescent coating (e.g. by being dyed with a fluorescent dye). Alternatively, the identification elements are visible when illuminated by light of optical or infrared wavelengths (by reflection or absorption and re-emission).

Preferably, the identification elements form an integral part of the object (e.g. by being embedded in the object). Alternatively, the identification elements can be affixed to the surface of the object.

Preferably, the reference point is in the form of a printed symbol. Preferably, the reference point does not have rotational symmetry, so that the orientation of the object can be determined from the orientation of the reference point. Preferably, the reference point is in a T-shape.

Optionally, the object is a liquid. Optionally, the object is ink, and the identification elements comprise a suspension in the ink.

Optionally, the object comprises paper. Alternatively, the object comprises plastic or metal.

Preferably, the genuine object is provided with a secondary identifier; most preferably, the secondary identifier is unique to the genuine object. Optionally, the secondary identifier is printed on the object. Optionally, the secondary identifier comprises a number. Alternatively, the secondary identifier comprises a one-dimensional barcode or a two-dimensional barcode.

Embodiments which include a unique secondary identifier have the advantage that the object need only be compared with a single object bearing the same secondary identifier. This can provide a significant advantage in terms of processing speed.

According to a first aspect of the present invention, there is provided a method of verifying that an object is genuine according to claim 1.

According to a further aspect of the present disclosure there is provided a method of verifying that an object is genuine, including the steps of:
creating a genuine object having a primary identifier in the form of a plurality of identification elements affixed to the object, the identification elements being detectable in infrared, visible or UV wavelengths when illuminated by electromagnetic radiation having a wavelength of less than 0.1m; wherein the identification elements are randomly distributed so that the positions of the identification elements are unique to the genuine object; and wherein the genuine object is provided with a reference point defining an area of the object in which at least some of the identification elements are provided;
recording information relating to the positions of the identification elements relative to the reference point in the genuine object; and
comparing measured information relating to the positions of identification elements in an object to be verified with the recorded information for the genuine object.

Preferably, the information relating to the positions of the identification elements in the genuine object is recorded in a database.

Preferably, the positions of the identification elements are converted into a numerical code for storage in the database.

Preferably, the positions of the identification elements are converted into an alphanumerical code for storage in the database.

Preferably, the numerical/alphanumerical code created is unique to that object. This is typically due to the identification elements being positioned randomly in the object. This unique numerical/alphanumerical code cannot be reverse engineered to determine the location of the identification elements in the object. This makes the object considerably more difficult, if not impossible, to counterfeit.

Typically, only information relating to identification elements within a specified area relative to the reference point is recorded.

Typically, the method includes the step of measuring the positions of identification elements in the object to be verified. Preferably, the positions of identification elements in the object to be verified are measured relative to a reference point in the object to be verified.

Typically, the information relating to the positions of the identification elements in the genuine object is converted into a numerical (or alphanumerical) code and recorded in this form. Typically, the measured information relating to the positions of identification elements in the object to be verified is also in the form of a numerical (or alphanumerical) code, and the step of comparing the information comprises comparing these codes.

Preferably, corresponding numbers in each numerical (or alphanumerical) code are compared, to within a specified tolerance level. Different tolerance levels can be provided to correspond to different levels of security.

Typically, the genuine object is provided with a secondary identifier, and the method includes the step of detecting and recording information relating to the secondary identifier. Preferably, the secondary identifier is unique to the object. Preferably, a plurality of genuine objects are created and recorded. Optionally, information relating to the object to be verified is only compared to recorded information relating to genuine objects having the same secondary identifier. Typically, the identification elements are fluorescent, and the method includes the step of illuminating the identification elements with ultraviolet light, and detecting the emitted visible light with a camera. Typically, the camera image is then analysed and converted into numerical data.

Optionally, the genuine object comprises paper, and the method includes the step of adding the identification elements to the paper during the paper-making process, so that the identification elements form an integral component of the finished paper.

According to a second aspect of the present invention there is provided an apparatus according to claim 16.

According to a further aspect of the present disclosure there is provided a detector for verifying that an object according to the present invention is genuine, comprising a source of electromagnetic radiation having a wavelength of less than 0.1m; a camera capable of detecting wavelengths between infrared and ultraviolet; image analysis equipment for converting the camera image into a numerical code; a database into which the numerical code can be recorded and from which numerical codes relating to other recorded camera images can be retrieved; and processing equipment adapted to compare the numericaL code relating to the object being verified with the other numerical codes already stored in the database relating to recorded camera images.

Typically, the processing equipment uses a processing algorithm.

Preferably, the detector is adapted to be hand-held.

Optionally, the detector includes a conveyor for conveying the object past the source of electromagnetic radiation and the camera.

Preferably, the detector is adapted to detect the location of a reference point on the object, and to direct the camera to this part of the object.

Typically, the source of electromagnetic radiation comprises a source of ultraviolet light. Typically, the camera is adapted to detect visible light.

Typically, the image analysis equipment is adapted to divide the camera image into a plurality of subregions and to count the number of pixels illuminated in each sub-region to produce a numerical (or alphanumerical) code corresponding to the camera image.

Typically, the processing equipment is adapted to compare the numerical (or alphanumerical) codes to within a specified tolerance level.

Optionally, the detector is adapted to compare the numerical (or alphanumerical) code relating to the object to be verified with all of the numerical (or alphanumerical) codes in the database.

Alternatively, the detector is adapted to recognise and record information relating to a secondary identifier, and the processing equipment is adapted to compare the numerical (or alphanumerical) code relating to the object to be verified only to numerical (or alphanumerical) codes relating to recorded objects that have the same secondary identifier.

An embodiment of the invention will now be described, by way of example only, and with reference to the following drawings, in which:-
Fig 1 shows a bank note according to the present invention, having fibres visible in UV light embedded within it;
Fig 2 shows an object according to the invention in the form of a cheque;
Fig 3 shows an enlarged portion of a part of the cheque as seen by a camera able to detect UV radiation; and
Fig 4 shows the camera image of Fig 3 divided into squares as a means of recording the location of the fibres within the image.

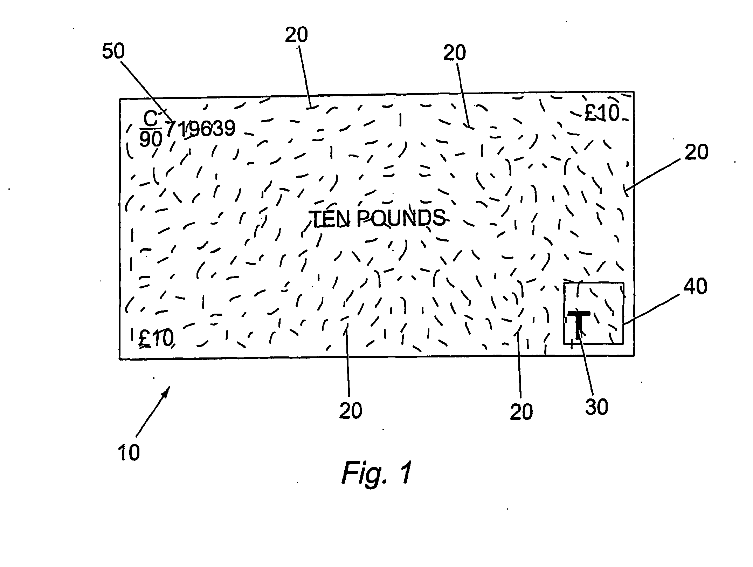

In a first embodiment of the invention, an object in the form of a bank note 10 as shown in Fig 1. The bank note has identification elements in the form of viscose fibres 20 (brand name: Rayon) embedded within it. The viscose fibres 20 have been dyed with a fluorescent dye so that they emit visible light in response to incoming ultraviolet radiation. (the viscose fibres 20 will hereinafter be called UV fibres 20). The fluorescent dye makes the UV fibres 20 visible against the background cellulose fibre of the paper.

The UV fibres are arranged in a random orientation in the bank note 10.

It should be noted that the UV fibres 20 are not necessarily visible to the naked eye; however, they have been shown in Fig 1 by way of example only. The UV fibres 20 in this drawing are not to scale.

Preferred UV fibre dimensions are approximately 4 to 8 millimetres in length (most preferably 6 millimetres) and 20 to 40 microns in diameter (most preferably 30 microns); however the UV fibres may have a wide range of lengths and diameters.

All the usual printed information and detail (not shown) is printed on the bank note 10. This information includes a serial number 50, which serves as a unique primary identifier, to distinguish this particular bank note 10 from other bank notes.

Since the paper from which the bank note 10 is made has UV fibres embedded in random positions throughout the paper, the positions of the UV fibres are unique to the bank note 10. The positions of the UV fibres can be observed (e.g. by a detector which will be subsequently described) and stored in a database, together with the serial number 50 of the bank note 10; this would typically happen shortly after the bank note 10 has been created, whilst the newly created bank note 10 is still in the control of the bank.

After the bank note 10 has been put into circulation, to check whether a bank note bearing serial number 50 is in fact the genuine bank note 10, the serial number 50 is read and the positions of the UV fibres 20 are observed. If the positions of the UV fibres 20 match the positions recorded in the database for bank note 10, the bank note is deemed genuine.

In some embodiments, it is not necessary to record the position of every UV fibre 20 in the bank note; rather it is more efficient just to record and compare the UV fibres in a particular part of the bank note, for example area 40 of bank note 10. For this purpose a reference point in the form of a marker device comprising a printed T-shape 30 is provided. T-shape 30 can be used as a reference element to direct a camera to observe the UV fibres within a particular boundary (e.g. area 40) relative to the printed T-shape 30.

Alternatively, a camera may observe the entire area of the bank note, but only information relating to the UV fibres 20 within a particular boundary may be recorded.

A method of creating paper with embedded UV fibres will now be described.

Firstly, the UV fibres are created by making viscose fibres of the above dimensions and then dying them with a dye that is visible in ultraviolet radiation. The dye is a fluorescent dye, so that the dyed fibres can absorb ultraviolet radiation and emit visible light in response.

As is generally known in the paper making industry, paper is made by dispersing cellulose fibres in water in the approximate ratio of one part fibre to 100 parts of water. This dispersion is pumped on to a continuously moving porous belt. The water drains through the belt leaving the fibre behind on the surface to form a mat. When the concentration of the fibre has risen to approximately 20%, the mat is strong enough to support itself. At this point, the mat is lifted off the belt, pressed through rollers to remove more water and then dried against hot cylinders.

UV fibres are added to the dispersion just before the dispersion is pumped onto the belt. The addition rate depends on the desired density of UV fibres in the finished paper. A typical addition rate is 2kg of fibres per 1000kg of finished paper. This method of adding the UV fibres to the dispersion has the advantage that the UV fibres will form an integral part of the paper structure. Furthermore, this method ensures that the UV fibres are distributed in a random manner throughout the paper. This helps ensure that the pattern of UV fibres in each piece of paper made by this technique.

It has been discovered that if the UV fibres are too short and thin, they could drain through the fabric of the paper whilst the paper is being formed. If the UV fibres are too long and wide, they could cause knots or clumps, which could lead to the fibres being rejected by the cleaning system.

Fibres of the dimensions given above have been found not to cause either of these problems.

A detector (not shown) suitable for use with such objects will now be described. The detector is adapted both to "lock in" (i.e. record in a database) details concerning an object, and also to "unlock" (i.e. to read) the document to verify that the object is genuine. The detector includes a UV source and a camera. The camera is adapted to detect the light produced by the UV fibres in an object on illumination of these UV fibres by the UV source. The detector also includes image analysis equipment for evaluating the pictures taken by the camera. The detector includes a device for detecting a reference point (e.g. T-shape 30), which indicates which part of the object to photograph, and/or which part of the object to analyse. The detector also includes a scanner and associated recognition technology, which is adapted to read a secondary identifier in the form of a number (e.g. a serial number) printed on the object. The detector also includes a conveying means in the form of a conveyor belt for conveying an object past a stationary UV source and a stationary camera.

In alternative embodiments, the detector is hand-held and it does not necessarily have a conveying means.

The detector is coupled to a PC, which serves as an interface between an operator and the detector. The PC has access to a database in which the serial number and information relating to the analysed images can be stored. This database may be stored in the PC itself, or in another PC (e-g. a central computer which stores data which can be accessed by many detectors via the internet). Having a database which is external to the detector is advantageous in the case that the place to verify the object is different from the place of creation of the object. For example, bank notes will be created by a bank, but verification of the notes will take place in many different shops. It is useful as each shop has a detector which can refer to a central database containing information on all issued bank notes.

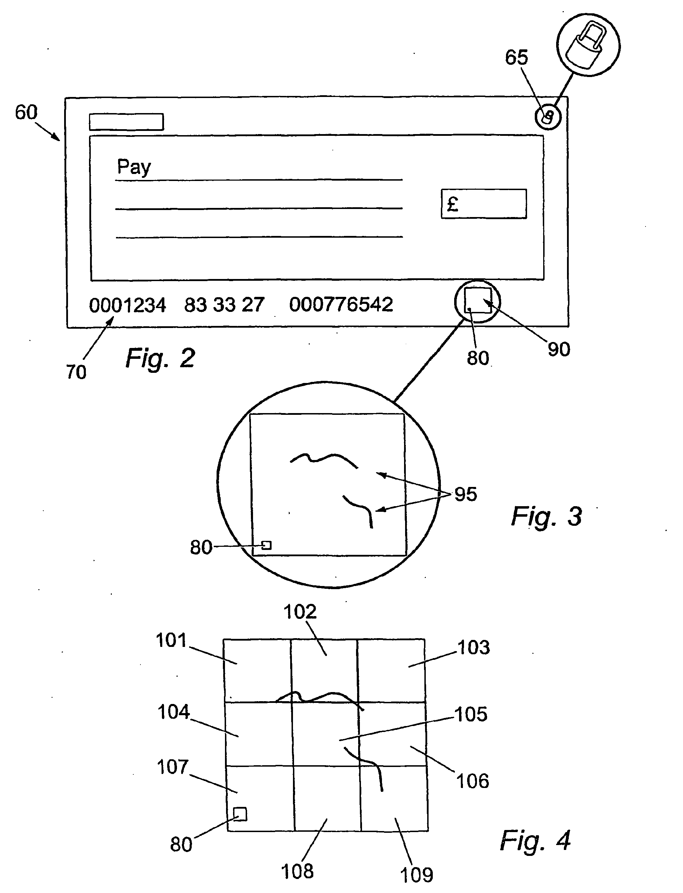

A use of the detector to lock and unlock a cheque 60 having embedded UV fibres will now be described; cheque 60 is shown in Fig 2 and has a serial number 70. Cheque 60 is also provided with a reference point in the form of a marker 80, which defines a region 90 of the cheque to be photographed by the camera in the detector. The marker 80 is shown symbolically as a square; however, a preferred form of marker 80 is a T-shape. T-shape markers have the advantage that it is easy to tell which way up the T-shape is, thus, the T-shape helps to ensure that the correct area 80 is photographed by the camera, and/or that the correct area 80 is analysed. If, for example, the cheque is inserted the wrong way round, this would be noticed from the T-shape and it would be possible for the image analysis equipment to make corresponding adjustments, so that the correct area 80 is photographed and/or analysed.

Cheque 60 is also provided with a printed symbol 65 (magnified view also shown), which indicates that the cheque 60 has been "security locked", to act as a deterrent to potential forgers.

In use, to lock the cheque 60, one would select an option in the PC, which would instruct the detector to expect an object and to tell the detector to "lock" this object into the database. The cheque 60 is then put onto the conveying means, which conveys the cheque 60 past the UV source and the camera. The UV source illuminates the cheque 60 with UV radiation. The marker 80 is detected by the detector, which sends a signal to the camera to photograph a region 90 of the cheque 60. The incident UV radiation causes the fluorescent UV fibres to emit visible light, which is detected by the camera observing region 90. Also whilst being conveyed, the detector reads the serial number 70 with the scanner and stores this number.

The use of the marker 80 ensures that the same area of cheque 60 is photographed each time, which provides consistent, reproducible measurements, even when measured by different detectors at different times.

The camera image is then analysed by the image analysis equipment. Alternatively, the entire area of the cheque 60 is photographed, but only the region 90 is analysed. Fig 3 shows a magnified image of region 90, which contains two UV fibres 95.
Fig 4 shows how the region 90 can be split up in smaller boxes of equal area, the boxes being numbered 101 to 109.

Each square contains 100 x 100 pixels, which gives a resolution of 0-99999. Using binary thresholding, a value is given to each box 101 to 109 based on the pixel count. A tolerance is added, which is plus or minus a certain amount, where this amount corresponds to a selected level of security.

The number of pixels in each box is then counted; the results are shown in Table 1.

**Table 1**

| Box Number | Number of Pixels | Tolerance |
|---|---|---|
| 101 | 00021 | ± X1 |
| 102 | 01124 | ± X1 |
| 103 | 00000 | ± X1 |
| 104 | 00004 | ± X1 |
| 105 | 00237 | ± X1 |
| 106 | 00128 | ± X1 |
| 107 | 00000 | ± X1 |
| 108 | 00000 | ± X1 |
| 109 | 00265 | ± X1 |

Where
X1 = 10% = low security
X2 = 5% = medium security
X3 = 2% = high security

The above results are then stored in the database together with the serial number 70. This completes the locking process. This procedure is preferably done soon after creation of the cheque 60, before it leaves the control of the bank.

To unlock a cheque having a serial number 70, an "unlock" command is given to the PC. The cheque is put onto the conveyor means, and conveyed past the UV source and the camera as explained above with respect to locking the cheque. The incident UV radiation causes the UV fibres 95 to fluoresce, emitting visible light, which is photographed by the camera. The camera image is subdivided into boxes by the image analysis equipment, and the number of pixels detecting light in each box is counted, as before. The serial number 70 is also read by the scanner in the detector, and the detector then compares the number of illuminated pixels of the camera image from each box, with the corresponding information recorded in the database for the cheque 60 having serial number 70.

If the two results are the same to within the selected tolerance level (in the above example, plus or minus 10%), this indicates that the cheque being unlocked is the genuine cheque 60, and the PC returns a "Verified" message to the user. If the numbers of pixels are more different then this, the cheque being unlocked cannot be the cheque 60 and must be a forgery. In this case, the PC returns a "Sorry, this cheque is not verified" message to the user.

Modifications can be incorporated without departing from the scope of the present invention. For example, the identification elements are not necessarily fibres. For example, the identification elements can comprise particles of mica, silica, synthetic material, which have optionally been coated with an ultraviolet dye, or planchetta (water-resistant pieces of paper printed with UV or IR ink). If fibres are used, these are not necessarily viscose fibres; alternatively wool, cellulose, or paper can also be used. The fibres may be formed from synthetic or naturally occurring materials. The invention is not limited to any of these examples of identification elements. The identification elements can be anything which can be distributed randomly on or throughout the object.

The identification elements are not necessarily responsive to UV radiation; they could alternatively be responsive to gamma ray, X-ray, visible light, infrared or microwave radiation.

In the case of identification elements responsive to visible light, the fibres could simply be of a different colour to the rest of the paper, and the location of the fibres can be observed by a camera, just due to reflection of light, without any fluorescent effect at all.

In alternative embodiments, the fibres could be uniform in length.

In some embodiments, the UV fibres can be added at other points in the paper-making process, other than to the dispersion prior to this being pumped on to the moving belt. For example, the UV fibres could be added at a dispersing unit (e.g. a broke pulped or a virgin fibre pulper) or at a size press.

The Fig 1 embodiment has a secondary identifier in the form of a printed serial number, which is visible to the eye. However, other embodiments do not require a secondary identifier. For example, in the case of bank notes, information relating to the arrangement of identification elements relating to each created genuine bank note can be recorded in a database. When the detector comes to unlock a bank note to verify that it is genuine, the arrangement of identification elements in the bank note being unlocked can be compared to each recorded arrangement. If the bank note had been printed on stolen paper having embedded identification elements, there would not be any bank note locked in the database having that precise pattern of identification elements, and so the bank note would be deemed a forgery.

If a secondary identifier is provided, this could be in the form of features of shape, colour, texture (e.g. braille); the secondary identifier can be preferably serves as a unique identifier for a particular object. The secondary identifier could also comprise a second area of paper having embedded UV fibres. The secondary identifier could be a 1-dimensional or 2-dimensional bar code. In certain embodiments, primary identifier (e.g. the UV fibres) can be located directly underneath a secondary identifier in the form of a barcode or other printing.

In some embodiments, the detector could include or have access to pre-existing equipment, such as a standard barcode reader or serial number reader.

Embodiments which include a secondary identifier have the advantage that an object bearing the secondary identifier need only be compared to the single object bearing that same secondary identifier recorded in the database. In embodiments not having a secondary identifier, the object would have to be compared with all of the objects stored in the database. For embodiments such as bank notes, using a secondary identifier would provide a significant advantage in terms of speed.

The identification elements are not necessarily embedded in the paper; for example, the identification elements could be contained in an ink which is printed on to the paper.

Although the specific embodiments described above, (a cheque and a bank note) are both types of paper document, the invention is not limited to the use of paper or documents as such. For example, the object could be made of plastic, for example a plastic film. Furthermore, the object could be a CD having identification elements randomly distributed in the substrate from which the CD is made.

Other kinds of documents which could incorporate this system include passports and drivers licences. The invention provides security to all of kinds of objects at minimal expense, as the unique identifier can be incorporated into the fabric of the document itself.

The identification elements are not necessarily fibres.

In some embodiments, a first device could be used to lock (encode) an object, and a second, different device could be used to unlock (verify) an object.

In alternative embodiments, the detector may not have a conveying means, and the camera may be optionally moveable/directionable to scan across an area of a stationary object. Such embodiments are useful when the object to be scanned is a document affixed to a large object, or a large object itself, which could not be put through a conveying means.

In other embodiments, the detector could split up the camera image into more or fewer squares to alter the tolerance levels of the count.

The detector can be used in co-operation with other kinds of computer, such as a personal digital assistant or laptop.

More than one reference point could be used to indicate the portion of the object which should be photographed. "Photograph" is intended to include an image made from any type of electromagnetic radiation. The reference point is not necessarily a printed symbol; it could alternatively comprise a corner of the object, a perforated line or a recessed or projecting region of the object. The reference point is optionally concealed from the naked eye; for example, the reference point could comprise a fluorescent element embedded in the object.

The image analysis does not have to work by counting pixels; any means of comparing a received image from a document to be unlocked with the image stored for that serial number could be used.

The UV fibres could be adapted to reflect ultraviolet radiation, and/or absorb and re-emit the ultraviolet radiation. The UV fibres can be formed from a material which is naturally fluorescent; therefore the UV fibres are not necessarily dyed.

In alternative embodiments, the database could be a component of the detector, rather than an external database associated with a computer or other processing device.

In some embodiments, different devices could be provided for the two tasks of locking and unlocking. For example, in the case of bank notes, a locking device could be provided at the bank where the notes are created, and devices adapted to unlock only could be provided in shops.

## Claims

1. A method of verifying that an object (10) is genuine, including the steps of:
creating a genuine object (10) having a primary identifier in the form of a plurality of identification elements (20) embedded in the object (10), the identification elements (20) being optically detectable when illuminated by infrared or ultraviolet electromagnetic radiation but being visually indistinguishable from the rest of the object (10) when illuminated with visible light, wherein the identification elements (20) are randomly distributed so that the positions of the identification elements (20) are unique to the genuine object (10), and wherein the genuine object (10) is provided with a reference point in the form of a printed symbol (30);
recording information relating to the positions of identification elements (20) in the genuine object (10); and
comparing measured information relating to the positions of identification elements in an object to be verified with the recorded information for the genuine object (10);
**characterised in that**:
the method includes the step of identifying a particular area (90) of the genuine object (10) smaller than the whole area of the object, the particular area (90) being defined by the reference point (30); and
the recorded information relates to the positions of identification elements (20) in the particular area (90) relative to the reference point (30).

2. A method as claimed in claim 1, wherein only information relating to identification elements (20) within the particular area (90) of the genuine object (10) is recorded.

3. A method as claimed in claim 1 or claim 2, including the step of measuring the positions of identification elements in the object to be verified.

4. A method as claimed in claim 3, wherein the positions of identification elements in the object to be verified are measured relative to a reference point in the object to be verified.

5. A method as claimed in any of claims 1 to 4, wherein the information relating to the positions of the identification elements (20) in the genuine object (10) is converted into a numerical or alphanumerical code and recorded in this form.

6. A method as claimed in claim 5, wherein the numerical or alphanumerical code is unique to that object (10).

7. A method as claimed in claim 5 or claim 6, wherein the measured information relating to the positions of identification elements in the object to be verified is also in the form of a numerical or alphanumerical code, and the step of comparing the information comprises comparing these codes.

8. A method as claimed in claim 7, wherein corresponding numbers in each numerical or alphanumerical code are compared to within a specified tolerance level.

9. A method as claimed in any of claims 1 to 8, wherein the genuine object (10) is provided with a secondary identifier (50), and the method includes the step of detecting and recording information relating to the secondary identifier (50).

10. A method as claimed in claim 9, wherein the secondary identifier (50) is unique to the object (10).

11. A method as claimed in claim 9 or claim 10, wherein information relating to the object to be verified is only compared to recorded information relating to genuine objects (10) having the same secondary identifier (50).

12. A method as claimed in any of claims 1 to 11, wherein a plurality of genuine objects (10) are created and recorded.

13. A method as claimed in any of claims 1 to 12, wherein the identification elements (20) are fluorescent, and the method includes the steps of illuminating the identification elements (20) with ultraviolet light and detecting the emitted electromagnetic radiation with a camera.

14. A method as claimed in claim 13, wherein an image created by the camera is analysed and converted into numerical or alphanumerical data.

15. A method as claimed in any of claims 1 to 14, wherein the genuine object (10) comprises paper, and the method includes the step of adding the identification elements (20) to the paper during the paper-making process.

16. An apparatus comprising:
a detector for verifying that an object (10) is genuine; and
an object (10);
wherein the object (10) comprises a primary identifier in the form of a plurality of identification elements (20) embedded in the object (10), the identification elements (20) being optically detectable when illuminated by infrared or ultraviolet electromagnetic radiation but being visually indistinguishable from the rest of the object (10) when illuminated with visible light, the identification elements (20) being randomly distributed so that the positions of the identification elements (20) are unique to the object (10), and the object (10) further comprising a reference point (30) in the form of a printed symbol; and
wherein the detector comprises:
a source of infrared or ultraviolet electromagnetic radiation;
a camera ;
image analysis equipment for converting a camera image into a numerical or alphanumerical code;
a database into which the numerical or alphanumerical code can be recorded and from which numerical or alphanumerical codes relating to other recorded camera images can be retrieved; and
processing equipment adapted to compare the numerical or alphanumerical code relating to the object being verified with the other numerical or alphanumerical codes already stored in the database relating to recorded camera images;
**characterised in that**:
the detector is adapted to identify a particular area (90) of the object (10) smaller than the whole area of the object, the particular area (90) being defined by the reference point (30) and to record information relating to the positions of the identification elements (20) in the particular area (90) relative to the reference point (30).

17. An apparatus as claimed in claim 16, wherein the detector is adapted to detect the location of the reference point (30) on the object (10) and to direct the camera to this part of the object (10).

18. An apparatus as claimed in claim 16, wherein the detector is adapted to detect the location of the reference point (30) on the object (10) and to direct the image analysis equipment to a corresponding part of the image.

19. An apparatus as claimed in any of claims 16 to 18, wherein the source of electromagnetic radiation comprises a source of ultraviolet light.

20. An apparatus as claimed in any of claims 16 to 19, wherein the image analysis equipment is adapted to divide the camera image into a plurality of subregions (101) and to count the number of pixels illuminated in each sub-region (101) to produce a numerical or alphanumerical code corresponding to the camera image.

21. An apparatus as claimed in any of claims 16 to 20, wherein the detector is adapted to recognise and record information relating to a secondary identifier (50), and the processing equipment is adapted to compare the numerical or alphanumerical code relating to the object to be verified only to numerical or alphanumerical codes relating to recorded objects (10) that have the same secondary identifier (50).

## Patentansprüche

1. Ein Verfahren zum Verifizieren, dass ein Objekt (10) echt ist, das die folgenden Schritte umfasst:
Erzeugen eines echten Objekts (10) mit einem primären Identifikator in Form einer Vielzahl von in dem Objekt (10) eingebetteten Identifizierungselementen (20), wobei die Identifizierungselemente (20) optisch erfasst werden können, wenn sie mit infraroter oder ultravioletter elektromagnetischer Strahlung beleuchtet werden, aber von dem Rest des Objekts (10) visuell nicht zu unterscheiden sind, wenn sie mit sichtbarem Licht beleuchtet werden, wobei die Identifizierungselemente (20) willkürlich verteilt sind, so dass die Positionen der Identifizierungselemente (20) bezüglich des echten Objekts (10) einzigartig sind, und wobei das echte Objekt (10) mit einem Bezugspunkt in Form eines gedruckten Symbols (30) versehen ist;
Aufzeichnen von Informationen mit Bezug auf die Positionen der Identifizierungselemente (20) in dem echten Objekt (10) und
Vergleichen gemessener Informationen mit Bezug auf die Positionen der Identifizierungselemente in einem zu verifizierenden Objekt mit den aufgezeichneten Informationen für das echte Objekt (10);
**dadurch gekennzeichnet, dass**:
das Verfahren den Schritt des Identifizierens eines bestimmten Bereichs (90) des echten Objekts (10), der kleiner als der gesamte Bereich des Objekts ist, umfasst, wobei der bestimmte Bereich (90) durch den Bezugspunkt (30) definiert ist; und
sich die aufgezeichneten Informationen auf die Positionen der Identifizierungselemente (20) in dem bestimmten Bereich (90) relativ zu dem Bezugspunkt (30) beziehen.

2. Verfahren gemäß Anspruch 1, wobei nur Informationen mit Bezug auf die Identifizierungselemente (20) innerhalb des bestimmten Bereichs (90) des echten Objekts (10) aufgezeichnet werden.

3. Verfahren gemäß Anspruch 1 oder Anspruch 2, das den Schritt des Messens der Positionen der Identifizierungselemente in dem zu verifizierenden Objekt umfasst.

4. Verfahren gemäß Anspruch 3, wobei die Positionen der Identifizierungselemente in dem zu verifizierenden Objekt relativ zu einem Bezugspunkt in dem zu verifizierenden Objekt gemessen werden.

5. Verfahren gemäß einem der Ansprüche 1 bis 4, wobei die Informationen mit Bezug auf die Positionen der Identifizierungselemente (20) in dem echten Objekt (10) in einen numerischen oder alphanumerischen Code konvertiert und in dieser Form aufgezeichnet werden.

6. Verfahren gemäß Anspruch 5, wobei der numerische oder alphanumerische Code bezüglich dieses Objekts (10) einzigartig ist.

7. Verfahren gemäß Anspruch 5 oder Anspruch 6, wobei die gemessenen Informationen mit Bezug auf die Positionen der Identifizierungselemente in dem zu verifizierenden Objekt ebenfalls in Form eines numerischen oder alphanumerischen Codes vorliegen und der Schritt des Vergleichens der Informationen das Vergleichen dieser Code beinhaltet.

8. Verfahren gemäß Anspruch 7, wobei entsprechende Nummern in jedem numerischen oder alphanumerischen Code innerhalb einer spezifizierten Toleranzgrenze verglichen werden.

9. Verfahren gemäß einem der Ansprüche 1 bis 8, wobei das echte Objekt (10) mit einem sekundären Identifikator (50) versehen ist und das Verfahren den Schritt des Erfassens und Aufzeichnens von Informationen mit Bezug auf den sekundären Identifikator (50) umfasst.

10. Verfahren gemäß Anspruch 9, wobei der sekundäre Identifikator (50) bezüglich des Objekts (10) einzigartig ist.

11. Verfahren gemäß Anspruch 9 oder Anspruch 10, wobei Informationen mit Bezug auf das zu verifizierende Objekt nur mit aufgezeichneten Informationen mit Bezug auf echte Objekte (10) mit demselben sekundären Identifikator (50) verglichen werden.

12. Verfahren gemäß einem der Ansprüche 1 bis 11, wobei eine Vielzahl von echten Objekten (10) erzeugt und aufgezeichnet wird.

13. Verfahren gemäß einem der Ansprüche 1 bis 12, wobei die Identifizierungselemente (20) fluoreszent sind und das Verfahren die Schritte des Beleuchtens der Identifizierungselemente (20) mit ultraviolettem Licht und das Erfassen der emittierten elektromagnetischen Strahlung mit einer Kamera umfasst.

14. Verfahren gemäß Anspruch 13, wobei ein durch die Kamera erzeugtes Bild analysiert und in numerische oder alphanumerische Daten konvertiert wird.

15. Verfahren gemäß einem der Ansprüche 1 bis 14, wobei das echte Objekt (10) Papier beinhaltet und das Verfahren den Schritt des Hinzufügens der Identifizierungselemente (20) zu dem Papier während des Papierfertigungsvorgangs umfasst.

16. Eine Vorrichtung, die Folgendes beinhaltet:
einen Detektor zum Verifizieren, dass ein Objekt (10) echt ist und
ein Objekt (10);
wobei das Objekt (10) einen primären Identifikator in Form einer Vielzahl von in dem Objekt (10) eingebetteten Identifizierungselementen (20) beinhaltet, wobei die Identifizierungselemente (20) optisch erfasst werden können, wenn sie mit infraroter oder ultravioletter elektromagnetischer Strahlung beleuchtet werden, aber von dem Rest des Objekts (10) visuell nicht zu unterscheiden sind, wenn sie mit sichtbarem Licht beleuchtet werden, wobei die Identifizierungselemente (20) willkürlich verteilt sind, so dass die Positionen der Identifizierungselemente (20) bezüglich des Objekts (10) einzigartig sind, und wobei das Objekt (10) ferner einen Bezugspunkt (30) in Form eines gedruckten Symbols beinhaltet und
wobei der Detektor Folgendes beinhaltet:
eine Quelle infraroter oder ultravioletter elektromagnetischer Strahlung;
eine Kamera;
eine Bildanalyseeinrichtung zum Konvertieren eines Kamerabilds in einen numerischen oder alphanumerischen Code;
eine Datenbank, in der der numerische oder alphanumerische Code aufgezeichnet werden kann und aus der numerische oder alphanumerische Codes mit Bezug auf andere aufgezeichnete Kamerabilder abgerufen werden können; und
eine Bearbeitungseinrichtung, die angepasst ist, um den numerischen oder alphanumerischen Code mit Bezug auf das Objekt, das verifiziert wird, mit den anderen numerischen oder alphanumerischen Codes, die bereits in der Datenbank mit Bezug auf die aufgezeichneten Kamerabilder gespeichert sind, zu vergleichen;
**dadurch gekennzeichnet, dass**:
der Detektor angepasst ist, um einen bestimmten Bereich (90) des Objekts (10), der kleiner ist als der gesamte Bereich des Objekts, zu identifizieren, wobei der bestimmte Bereich (90) durch den Bezugspunkt (30) definiert ist, und um Informationen mit Bezug auf die Positionen der Identifizierungselemente (20) in dem bestimmten Bereich (90) relativ zu dem Bezugspunkt (30) aufzuzeichnen.

17. Vorrichtung gemäß Anspruch 16, wobei der Detektor angepasst ist, um die Stelle des Bezugspunkts (30) auf dem Objekt (10) zu erfassen und die Kamera zu diesem Teil des Objekts (10) zu führen.

18. Vorrichtung gemäß Anspruch 16, wobei der Detektor angepasst ist, um die Stelle des Bezugspunkts (30) auf dem Objekt (10) zu erfassen und die Bildanalyseeinrichtung zu einem entsprechenden Teil des Bilds zu leiten.

19. Vorrichtung gemäß einem der Ansprüche 16 bis 18, wobei die Quelle elektromagnetischer Strahlung eine Quelle ultravioletten Lichts beinhaltet.

20. Vorrichtung gemäß einem der Ansprüche 16 bis 19, wobei die Bildanalyseeinrichtung angepasst ist, um das Kamerabild in eine Vielzahl von Unterbereichen (101) zu unterteilen und die Anzahl an Pixeln, die in jedem Unterbereich (101) beleuchtet werden, zu zählen, um einen numerischen oder alphanumerischen Code, der dem Kamerabild entspricht, zu produzieren.

21. Vorrichtung gemäß einem der Ansprüche 16 bis 20, wobei der Detektor angepasst ist, um Informationen mit Bezug auf einen sekundären Identifikator (50) zu erkennen und aufzuzeichnen, und die Verarbeitungseinrichtung angepasst ist, um den numerischen oder alphanumerischen Code mit Bezug auf das zu verifizierende Objekt lediglich mit numerischen oder alphanumerischen Codes mit Bezug auf aufgezeichnete Objekte (10), die denselben sekundären Identifikator (50) aufweisen, zu vergleichen.

## Revendications

1. Une méthode pour vérifier qu'un objet (10) est authentique, comportant les étapes :
de créer un objet authentique (10) ayant un identificateur primaire sous la forme d'une pluralité d'éléments d'identification (20) implantés dans l'objet (10), les éléments d'identification (20) étant détectables optiquement lorsqu'ils sont éclairés par un rayonnement électromagnétique infrarouge ou ultraviolet mais indistinguables visuellement du reste de l'objet (10) lorsqu'ils sont éclairés avec de la lumière visible, où les éléments d'identification (20) sont répartis de manière aléatoire de sorte que les positions des éléments d'identification (20) soient uniques à l'objet authentique (10), et où l'objet authentique (10) est pourvu d'un point de référence sous la forme d'un symbole imprimé (30) ;
d'enregistrer des informations ayant trait aux positions d'éléments d'identification (20) dans l'objet authentique (10) ; et
de comparer des informations mesurées ayant trait aux positions d'éléments d'identification dans un objet à vérifier avec les informations enregistrées pour l'objet authentique (10) ;
**caractérisée en ce que** :
la méthode comporte l'étape d'identifier une zone particulière (90) de l'objet authentique (10) plus petite que la zone entière de l'objet, la zone particulière (90) étant définie par le point de référence (30) ; et
les informations enregistrées ont trait aux positions d'éléments d'identification (20) dans la zone particulière (90) par rapport au point de référence (30).

2. Une méthode telle que revendiquée dans la revendication 1, où seules sont enregistrées des informations ayant trait à des éléments d'identification (20) au sein de la zone particulière (90) de l'objet authentique (10).

3. Une méthode telle que revendiquée dans la revendication 1 ou la revendication 2, comportant l'étape de mesurer les positions d'éléments d'identification dans l'objet à vérifier.

4. Une méthode telle que revendiquée dans la revendication 3, où les positions d'éléments d'identification dans l'objet à vérifier sont mesurées par rapport à un point de référence dans l'objet à vérifier.

5. Une méthode telle que revendiquée dans n'importe lesquelles des revendications 1 à 4, où les informations ayant trait aux positions des éléments d'identification (20) dans l'objet authentique (10) sont converties en un code numérique ou alphanumérique et enregistrées sous cette forme.

6. Une méthode telle que revendiquée dans la revendication 5, où le code numérique ou alphanumérique est unique à cet objet (10).

7. Une méthode telle que revendiquée dans la revendication 5 ou la revendication 6, où les informations mesurées ayant trait aux positions d'éléments d'identification dans l'objet à vérifier sont également sous la forme d'un code numérique ou alphanumérique, et l'étape de comparer les informations comprend la comparaison de ces codes.

8. Une méthode telle que revendiquée dans la revendication 7, où des nombres correspondants dans chaque code numérique ou alphanumérique sont comparés à un niveau de tolérance spécifié près.

9. Une méthode telle que revendiquée dans n'importe lesquelles des revendications 1 à 8, où l'objet authentique (10) est pourvu d'un identificateur secondaire (50), et la méthode comporte l'étape de détecter et d'enregistrer des informations ayant trait à l'identificateur secondaire (50).

10. Une méthode telle que revendiquée dans la revendication 9, où l'identificateur secondaire (50) est unique à l'objet (10).

11. Une méthode telle que revendiquée dans la revendication 9 ou la revendication 10, où des informations ayant trait à l'objet devant être vérifié sont uniquement comparées à des informations enregistrées ayant trait à des objets authentiques (10) ayant le même identificateur secondaire (50).

12. Une méthode telle que revendiquée dans n'importe lesquelles des revendications 1 à 11, où une pluralité d'objets authentiques (10) sont créés et enregistrés.

13. Une méthode telle que revendiquée dans n'importe lesquelles des revendications 1 à 12, où les éléments d'identification (20) sont fluorescents, et la méthode comporte les étapes d'éclairer les éléments d'identification (20) avec de la lumière ultraviolette et de détecter le rayonnement électromagnétique émis avec un appareil photographique.

14. Une méthode telle que revendiquée dans la revendication 13, où une image créée par l'appareil photographique est analysée et convertie en données numériques ou alphanumériques.

15. Une méthode telle que revendiquée dans n'importe lesquelles des revendications 1 à 14, où l'objet authentique (10) comprend du papier, et la méthode comporte l'étape d'ajouter les éléments d'identification (20) au papier pendant le processus de fabrication de papier.

16. Un appareil comprenant:
un détecteur pour vérifier qu'un objet (10) est authentique ; et
un objet (10) ;
où l'objet (10) comprend un identificateur primaire sous la forme d'une pluralité d'éléments d'identification (20) implantés dans l'objet (10), les éléments d'identification (20) étant détectables optiquement lorsqu'ils sont éclairés par un rayonnement électromagnétique infrarouge ou ultraviolet mais indistinguables visuellement du reste de l'objet (10) lorsqu'ils sont éclairés avec de la lumière visible, les éléments d'identification (20) étant répartis de manière aléatoire de sorte que les positions des éléments d'identification (20) soient uniques à l'objet (10), et l'objet (10) comprenant en outre un point de référence (30) sous la forme d'un symbole imprimé ; et
où le détecteur comprend :
une source de rayonnement électromagnétique infrarouge ou ultraviolet ;
un appareil photographique ;
un équipement d'analyse d'image pour convertir une image d'appareil photographique en un code numérique ou alphanumérique ;
une base de données dans laquelle le code numérique ou alphanumérique peut être enregistré et de laquelle des codes numériques ou alphanumériques ayant trait à d'autres images d'appareil photographique enregistrées peuvent être récupérés ; et
un équipement de traitement adapté pour comparer le code numérique ou alphanumérique ayant trait à l'objet en cours de vérification aux autres codes numériques ou alphanumériques déjà stockés dans la base de données ayant trait à des images d'appareil photographique enregistrées ;
**caractérisé en ce que** :
le détecteur est adapté pour identifier une zone particulière (90) de l'objet (10) plus petite que la zone entière de l'objet, la zone particulière (90) étant définie par le point de référence (30) et pour enregistrer des informations ayant trait aux positions des éléments d'identification (20) dans la zone particulière (90) par rapport au point de référence (30).

17. Un appareil tel que revendiqué dans la revendication 16, où le détecteur est adapté pour détecter l'emplacement du point de référence (30) sur l'objet (10) et pour diriger l'appareil photographique vers cette partie de l'objet (10).

18. Un appareil tel que revendiqué dans la revendication 16, où le détecteur est adapté pour détecter l'emplacement du point de référence (30) sur l'objet (10) et pour diriger l'équipement d'analyse d'image vers une partie correspondante de l'image.

19. Un appareil tel que revendiqué dans n'importe lesquelles des revendications 16 à 18, où la source de rayonnement électromagnétique comprend une source de lumière ultraviolette.

20. Un appareil tel que revendiqué dans n'importe lesquelles des revendications 16 à 19, où l'équipement d'analyse d'image est adapté pour diviser l'image d'appareil photographique en une pluralité de sous-régions (101) et pour compter le nombre de pixels éclairés dans chaque sous-région (101) afin de produire un code numérique ou alphanumérique correspondant à l'image d'appareil photographique.

21. Un appareil tel que revendiqué dans n'importe lesquelles des revendications 16 à 20, dans lequel le détecteur est adapté pour reconnaître et enregistrer des informations ayant trait à un identificateur secondaire (50), et l'équipement de traitement est adapté pour comparer le code numérique ou alphanumérique ayant trait à l'objet devant être vérifié seulement à des codes numériques ou alphanumériques ayant trait à des objets enregistrés (10) qui ont le même identificateur secondaire (50).
